Europäisches Patentamt

(19) European Patent Office

Office européen des brevets

(11) Veröffentlichungsnummer: **0 035 973**
**B1**

(12) **EUROPÄISCHE PATENTSCHRIFT**

(45) Veröffentlichungstag der Patentschrift:
**12.09.84**

(51) Int. Cl.³: **B 03 C 3/00,** B 01 D 46/30

(21) Anmeldenummer: **81810075.2**

(22) Anmeldetag: **04.03.81**

(54) **Einrichtung zum diskontinuierlichen Reinigen staubbeladener Rohgase.**

(30) Priorität: **11.03.80  CH 1904/80**

(43) Veröffentlichungstag der Anmeldung:
**16.09.81 Patentblatt 81/37**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**FR - A - 2 350 128**
**FR - A - 2 440 221**
**US - A - 4 144 359**

(73) Patentinhaber: **Gimag Aktiengesellschaft,**
**Martinsplatz 8, CH-7002 Chur (CH)**

(72) Erfinder: **Der Erfinder hat auf seine Nennung verzichtet**

(74) Vertreter: **Eschmann, Heinz et al, A. Braun, Braun,**
**Héritier, Eschmann AG Patentanwälte**
**Holbeinstrasse 36-38, CH-4051 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Einrichtung zum diskontinuierlichen Reinigen staubbeladener Rohgase unter Verwendung eines Filterbettes aus körnigem Filtermaterial, wobei im Bereich des Filterbettes eine elektrische Spannung zwischen 10 000 und 60 000 Volt angelegt wird, mit einer Anzahl parallel geschalteter Filtervorrichtungen, von welchen jede zwei voneinander beabstandete, gasdurchlässige Wände aufweist, zwischen welchen das Filterbett angeordnet ist, sowie mit Steuervorrichtungen zur Führung eines Rohgasstromes durch das Filterbett, zur Unterbrechung des Rohgasstromes und zur Regenerierung des Filterbettes. Eine solche Vorrichtung ist aus US-A-4 144 359 bekannt.

Es ist ferner bekannt (DE-OS 2 942 223), staubhaltiges Rohgas durch eine Filterschicht zu leiten, welche zwischen zwei voneinander beabstandeten, gasdurchlässigen Wänden angeordnet ist und aus grobkörnigem Material besteht, dessen mittlerer Durchmesser etwa bei 10 mm liegt. Innerhalb des die Vorrichtung kontinuierlich von oben nach unten durchwandernden Filterbettes von 600 mm Dicke sind Stäbe aus elektrisch leitendem Material angeordnet und an eine Spannung von maximal 50 000 Volt angeschlossen.

Bei Betrieb dieser bekannten Anlage zeigt sich, dass die Staubabscheidung innerhalb des Filterbettes durch die Anordnung der elektrisch leitenden Stäbe zwar etwas verbessert wird, dass dafür aber bei diesem bekannten Arbeitsprinzip schwerwiegende Nachteile in Kauf genommen werden müssen. Diese lassen sich folgendermassen zusammenfassen:

1. Das granulatförmige Material wandert im Betrieb ständig nach unten, wird ausserhalb des Filters gereinigt und von oben wieder auf das Filterbett gegeben. Es bedarf somit einer aufwendigen Reinigungsanlage (z.B. Schlauchfilter) sowie der dazugehörigen Fördermittel, was die Gesamtanlage erheblich verteuert.

2. Da die elektrisch leitenden Elemente in der Masse des Filtermaterials angeordnet sind und der Stromübergang somit notwendigerweise von einer der gasdurchlässigen Wände zu den elektrisch leitenden Elementen erfolgt, muss der Abstand dieser Elemente von den beiden gasdurchlässigen Wänden grösser als die der Hochspannung entsprechende Überschlagstrecke sein, wobei die Filterbettdicke dann mindestens der doppelten Überschlagstrecke entsprechen muss. Man erhält damit riesige Mengen umzuwälzenden Filtermaterials, die bei einem bekannten, ca. 10 m hohen Industriefilter beispielsweise 150 t Granulat umfassen, das innerhalb von 4 Stunden einmal umgewälzt und gereinigt wird.

3. Das verwendete grobkörnige Granulat lässt den im Rohgas enthaltenen Staub ferner tief ins Filterbett eindringen, so dass im Hinblick auf eine zufriedenstellende Entstaubung eine grosse Schichtdicke von etwa 600 mm erforderlich ist.

4. Das nach unten wandernde Filtermaterial wird in Querrichtung vom staubbeladenen Rohgas durchströmt und von oben her ständig durch neues, gereinigtes Filtermaterial ergänzt. Das unterste Material des Filterbettes ist daher stets am meisten verschmutzt und damit elektrisch leitend, so dass in diesem unteren Bereich ständig ein elektrischer Strom fliesst, der den erforderlichen Aufwand an Betriebsenergie beträchtlich erhöht. Es ergibt sich somit bei dieser bekannten Anordnung im oberen Filterbettbereich zwangsläufig ein hoher Gasdurchsatz mit schlechtem Reinigungsgrad, wobei die Effizienz der Rohgasreinigung entsprechend dem Verschmutzungsgrad des Filterbettes nach unten hin steigt und im unteren Abschnitt des Filterbettes zwar eine ausgezeichnete Staubabscheidung möglich wäre, der effektive Gasdurchgang jedoch praktisch gleich 0 ist.

Man hat bei diesem bekannten Prinzip die Wahl, entweder erheblich von der optimalen Betriebsspannung abzuweichen oder die Schichtdicke sicherheitshalber extrem zu vergrössern, was aber weitere Nachteile mit sich bringt.

5. In Anbetracht der grossen Masse des Filtermaterial und der entsprechend hohen Wärmeaufnahmekapazität desselben muss das Filtermaterial vor dem Eintritt in das Filterbett regelmässig vorgewärmt werden, damit die unerwünschte Kondensation, die das Zusammenbacken der Staubteilchen und die Bildung gasundurchlässiger Staubkuchen («moon pies») begünstigt, auf ein zulässiges Mass reduziert wird. Der mit dieser Aufwärmung verbundene Energieaufwand ist beträchtlich. Die dabei praktisch unvermeidliche Kondensation führt zu Hochspannungs-Überschlägen.

Aus der US-Patentschrift 4 144 359 ist es ferner bekannt, zwei parallele Filterbetten, welche nacheinander von einem verunreinigten Gas durchströmt wurden, durch Ablassen der kompletten Füllung und unter Aufrechterhaltung des kontinuierlichen Betriebs getrennt zu reinigen, wobei jeweils eine der das Filterbett begrenzenden Wände an Hochspannung liegt, während die andere Wand geerdet ist. Diese bekannte Anordnung lässt sich einerseits zur Reinigung staubbeladener Gase nicht verwenden, da beim Ablassen des der Reingasseite zugekehrten Filterbettes der aufgewirbelte Staub unweigerlich vom Reingas mitgenommen und dasselbe wieder verschmutzen würde. Auch erweist sich die Verwendung der beiden das Filterbett begrenzenden Wände als Elektroden als praktisch undurchführbar, da sich innerhalb des Filterbettes mit wachsender Verstaubung Kriechströme und Kurzschlüsse bilden. Auch die als Variante erwähnte Anordnung von Elektrodendrähten im Filterbett hat sich in der industriellen Anwendung aufgrund der schwer einhaltbaren Wandabstände und der Kriechstromgefahr nicht bewährt.

Es ist daher die Aufgabe der vorliegenden Erfindung, eine Einrichtung zur Reinigung staubhaltiger Medien vorzuschlagen, welche die erwähnten Nachteile der bekannten Anlage vermeiden. Dabei sollen zwar ebenfalls an Hochspannung liegende, elektrisch leitende Elemente verwendet, die gesamte Anordnung aber so getroffen werden, dass in jeder Betriebsphase ein praktisch 100%iger Gasdurchsatz bei optimalem Reinigungsgrad gewährleistet ist, die Anordnung einer ausserhalb liegenden Reinigungsvorrichtung entfällt und für das Filterbett nur ein Bruchteil des bisher erforderlichen Filtermaterials erforderlich ist. Der Aufbau unerwünschter Kriechströme im Filterbett soll mit Sicherheit vermieden und damit der gesamte Energieaufwand der Anlage verbessert werden. Diese Aufgabe wird dank der im unabhängigen Anspruch definierten Merkmalskombination gelöst.

Die beanspruchte Kombination der elektrostatischen Aufladung mit der diskontinuierlichen Regenerierung ergibt, wie Versuche gezeigt haben, einen überraschend hohen Reinigungsgrad bei geringen Anlagekosten und niedrigem Aufwand an Betriebsenergie. Ausserdem ist stets ein praktisch 100%iger Gasdurchsatz gewährleistet. Bei der bevorzugten Ausführungsform wird die Reinigung so durchgeführt, dass Stromdurchgänge praktisch ausgeschlossen sind und dennoch ein äusserst schmales Filterbett und eine dementsprechend geringe Masse an umzuwälzendem Filtermaterial eingesetzt werden können. Das Filtermaterial wird für jede Betriebsphase, welche etwa 30–60 Minuten dauert, vollständig gereinigt und dadurch zum perfekten Isolator, da als Filtermaterial vorzugsweise Quarzsand ($SiO_2$) verwendet wird.

Nachstehend wird anhand der beiliegenden Zeichnung ein Ausführungsbeispiel nebst einigen Konstruktionsvarianten erläutert.

Fig. 1 zeigt eine vereinfachte Schnittdarstellung einer Vorrichtung zum Filtern von Rohgas während der Betriebsphase;

Fig. 2 zeigt schematisch einen Ausschnitt II der in Fig. 1 dargestellten Vorrichtung;

Fig. 3 ist ein Schnitt längs der Linie III–III in Fig. 2;

Fig. 4 veranschaulicht die Anordnung verschiedener, parallelgeschalteter Filtervorrichtungen und die

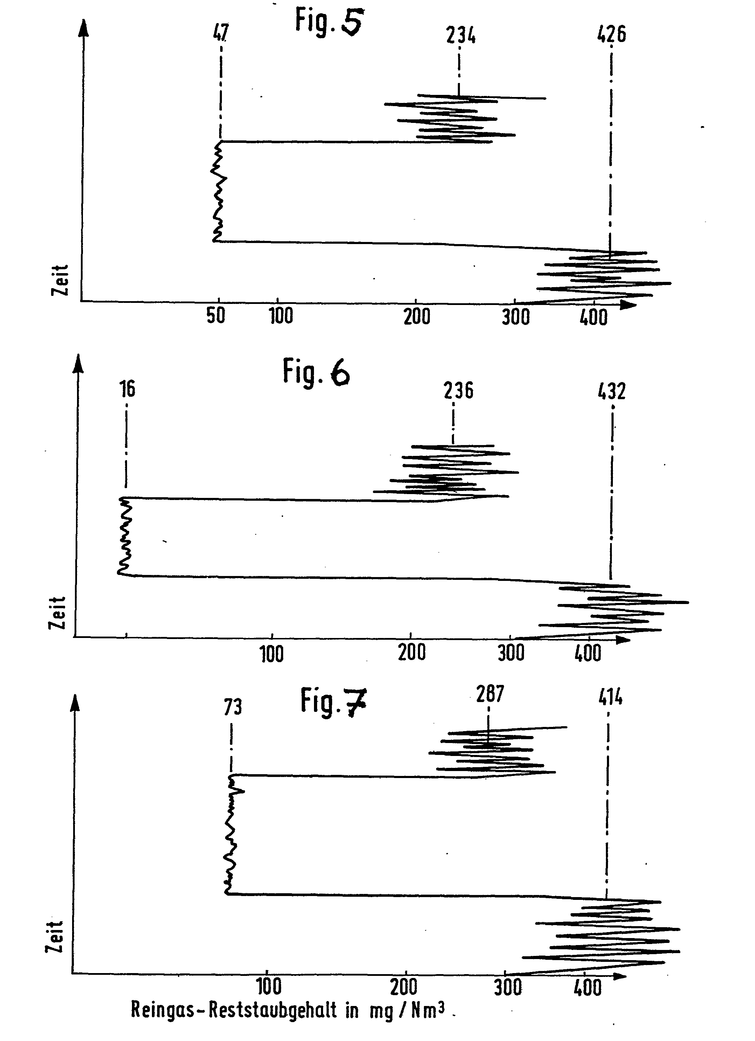

Fig. 5 bis 7 sind graphische Darstellungen von Versuchsergebnissen.

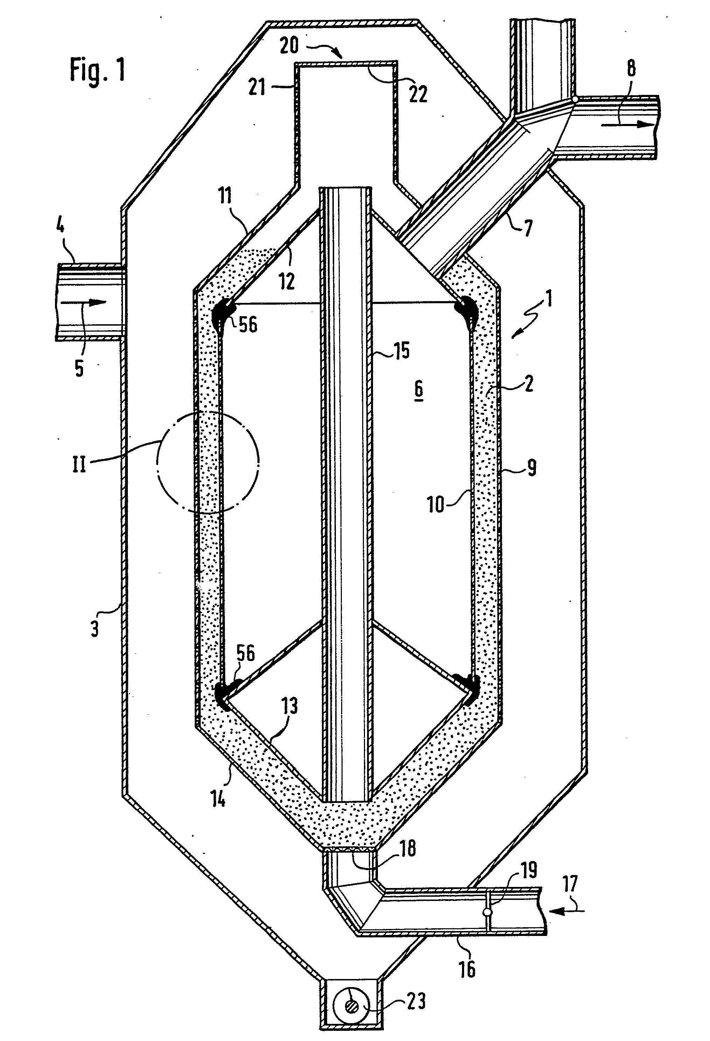

Fig. 1 zeigt in schematischer Darstellung eine Filtervorrichtung in Betriebsphase mit einem Filterelement 1, dessen Filterbett 2 aus körnigem Material besteht. Das Filterelement 1 ist in einer Rohgaskammer 3 der Filtervorrichtung angeordnet, in die über ein Rohr 4 staubhaltiges oder sonst verunreinigtes Rohgas, wie durch einen Pfeil 5 angedeutet, eingeführt wird. Das Rohgas tritt durch das Filterbett 2 in eine im Innern des Filterelements 1 gebildete Reingaskammer 6 und über eine in die Reingaskammer 6 mündende Rohrleitung 7 in Richtung eines Pfeiles 8 wieder aus.

Das Filterbett 2 ist zwischen zwei gleichachsig ineinander angeordneten und voneinander beabstandeten, gasdurchlässigen Rohren 9, 10 enthalten, die an ihren beiden axialen Enden jeweils durch kegelförmige, nach aussen sich verjüngende Kappen 11, 12 bzw. 13, 14 verschlossen sind. Die am gleichen axialen Ende angeordneten Kappen 11, 12 bzw. 13, 14 sind voneinander beabstandet, und das körnige Material reicht auf eine Länge in den dadurch zwischen den Kappen gebildeten Zwirschenraum hinein, die zur Abdichtung der Reingaskammer 6 gegenüber der Rohgaskammer 3 ausreicht.

Im Innern des Filterelements 1 ist gleichachsig zu den gasdurchlässigen Rohren 9, 10 ein Förderrohr 15 angeordnet, welche in die Kegelspitzen der inneren Kappen 12 bzw. 13 einmündet und während der Reinigungsphase der Filtervorrichtung körniges Material von der Unterseite des Filterbettes 2 zu dessen Oberseite fördert. Das Förderrohr 15 wirkt hierbei als Dünnstromförderer, dem über eine in der unteren, äusseren Kappe 14 an einer der Mündung des Förderrohres 15 gegenüberliegenden Stelle einmündenden Rohrleitung 16 in Richtung eines Pfeils 17 Förderluft zugeführt wird. Die Rohrleitung 16 ist gegenüber dem Filterbett 2 durch ein gasdurchlässiges Wandelement 18, beispielsweise ein Gitter, abgegrenzt, welches das Eindringen des körnigen Materials in der Rohrleitung 16 verhindert. Weiterhin ist im Weg der Förderluft ein Ventil 19, beispielsweise eine Klappe, angeordnet, das während der Betriebsphase (Fig. 1) geschlossen, während der Reinigungsphase jedoch offen ist. Auf die äussere obere Kappe 11 ist eine Haube 20 gleichachsig zum Förderrohr 15 aufgesetzt, deren Mantelfläche durch ein gasdurchlässiges Wandelement 21, beispielsweise ein Gitter, gebildet ist. Das dem Förderrohr 15 axial abgekehrte Ende der Haube 20 ist durch einen gasundurchlässigen Boden 22 verschlossen.

Im Betrieb der Filtereinrichtung strömt das Rohgas in Richtung des Pfeiles 5 in die Rohgaskammer 3 ein, durchströmt dann das Filterbett 2 und gibt dabei den mitgeführten Staub ab, welcher teils innerhalb des Filterbettes selbst, teils an der Aussenfläche der Wand 9 zurückgehalten wird und im letzteren Falle nach unten fällt und von einem Förderer 23 ausgetragen wird. Weitere Einzelheiten dieser Einrichtung können der CH-PS 614 128 entnommen werden.

Die Gleichstromquelle 28 kann ein Gleichrichter sein, der über einen Transformator an das Wechselstromnetz angeschlossen ist.

In der Regenerierphase, in welcher das Filterbett vom Spülgas durchströmt wird, ist die elektrostatische Aufladung unterbrochen.

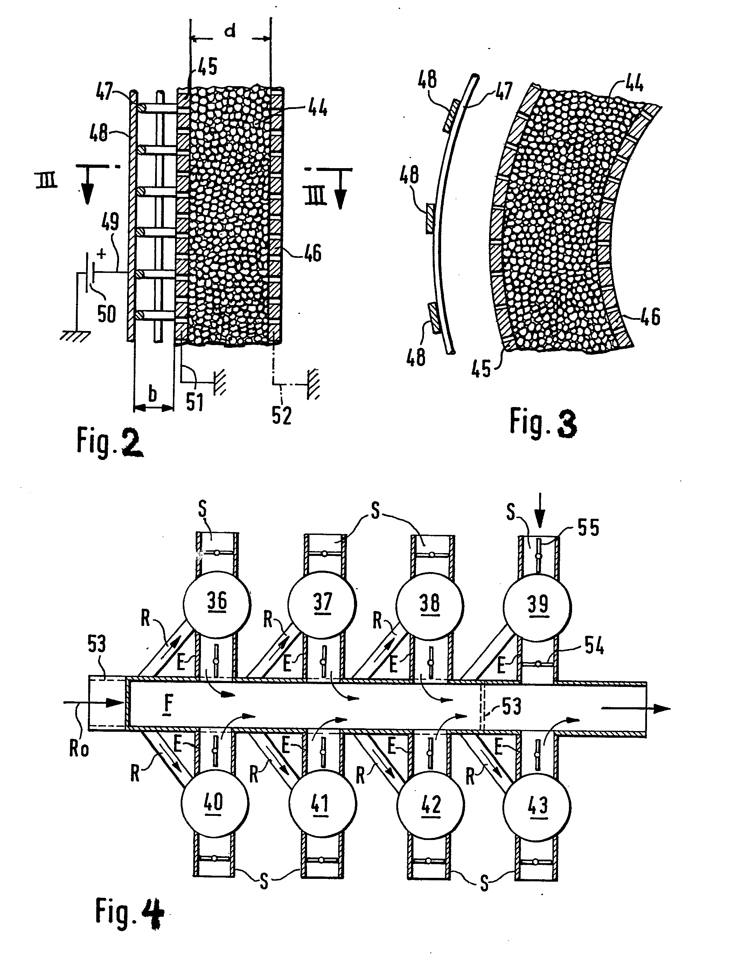

Gemäss einer weiteren, in Fig. 2 und 3 dargestellten Ausführungsform ist ein Filterbett 44 aus körnigem Material zwischen zwei gasdurchlässigen Wänden 45 und 46 angeordnet. Die Schnittdarstellung nach Fig. 4 zeigt wiederum den in Fig. 1 mit II bezeichneten Ausschnitt. Im Abstand b von der aussenliegenden gasdurchlässigen Wand 45 befindet sich eine Gitterstruktur, die beispielsweise aus horizontalen Ringen 47 und die übereinander liegenden Ringe miteinander verbindenden Vertikaldrähten 48 bestehen kann. Die Gitterstruktur 47/48 ist über eine Leitung 49 mit dem einen Pol einer Gleichstromquelle 50 verbunden, während die aussenliegende gasdurchlässige Wand 45 über eine weitere Leitung 51 geerdet ist.

Aufgrund der Anordnung der Elektroden ausserhalb des Filterbettes ergibt sich dank der relativ guten Isoliereigenschaften der Luft ein ausgezeichneter Wirkungsgrad, da Kriechströme und Kurzschlüsse so gut wie ausgeschlossen werden können. Der Abstand b der Elektrodengitterstruktur 47/48 von der benachbarten Wand 45 ist eindeutig festlegbar und lässt sich auch während des Betriebs überprüfen und erforderlichenfalls auch variieren.

Eine im industriellen Einsatz befindliche Filteranlage weist, wie Fig. 4 zeigt, mehrere parallelgeschaltete Filtervorrichtungen 36 bis 43 auf, die im Betrieb vom Rohgas durchströmt werden. Durch einen Rohgaskanal 53 strömt das staubbeladene Rohgas in Richtung des Pfeiles Ro und verteilt sich dann durch die Kanäle R auf die einzelnen Filtervorrichtungen 36 bis 43. Nach dem Durchströmen der Filtervorrichtung 36 bis 43 strömt das gereinigte Gas durch einen Reingasaustrittskanal E in den gemeinsamen Reingassammelkanal F, der in Fig. 4 oberhalb des Rohgaskanals 53 liegt und denselben zum grossen Teil verdeckt. Der Rohgaskanal 53 erstreckt sich somit unterhalb des Reingassammelkanals F bis zu der mit unterbrochenen Linien dargestellten Stirnwand.

Wie sich ferner aus Fig. 4 ergibt, sind die Spülgas-Eintrittskanäle S sämtlicher Filtervorrichtungen mit Ausnahme der Filtervorrichtung 39 geschlossen. Dies bedeutet, dass die Vorrichtungen 36, 37, 38 sowie 40 bis 43 auf Rohgas-Reinigungsbetrieb geschaltet sind, während die Vorrichtung 39 gerade regeneriert wird. Aus diesem Grunde ist auch die Absperrklappe 54 des der Vorrichtung 39 zugeordneten Reingasaustrittskanals E geschlossen, während die Spülgaseintrittsklappe 55 in der gleichen Vorrichtung geöffnet ist. Die Anlage ist automatisch so gesteuert, dass sich nach einer bestimmten, den Betriebsverhältnissen anpassbaren Regenerierzeit die Klappe 55 schliesst, während die Klappe 54 wieder geöffnet wird, wobei gleichzeitig die nächste Vorrichtung, beispielsweise die mit 40 bezeichnete, von der Rohgasreinigung auf Regenerierung umgestellt wird. Auf diese Weise wird ständig ein 100%iger Gasdurchsatz gewährleistet und die Regenerierfrequenz der Vorrichtung kann so gewählt werden, dass das körnige Filterbett praktisch stets so sauber ist, dass man dessen elektrische Leitfähigkeit vernachlässigen kann.

Die mit der beschriebenen Anlage durchgeführten Versuche haben nun gezeigt, dass bei Anwendung der elektrostatischen Aufladung mittels Hochspannung eine geringere Schichtdicke bei kleinem Korndurchmesser das weitaus bessere Resultat bringt, wogegen man bisher der Ansicht war, ein grobes Korn von etwa 10 mm mittlerem Durchmesser müsse bei einer grossen Schichtdicke d von beispielsweise 500 mm den optimalen Reinigungsgrad ergeben.

Diese Versuche zeigen nun mit aller Deutlichkeit, dass sich in der Kombination mit Hochspannung die geringeren Schichtdicken des Filterbettes sowie die feineren Körnungen desselben besser bewähren als die bisher üblichen grossen Schichtdicken und groben Materialkörnungen. So ergibt sich im Rahmen der vorliegenden Erfindung die Erkenntnis, dass die Kombination
- einer Filterbettdicke zwischen 25 und 100 mm mit
- einem mittleren Korndurchmesser des granulatförmigen Filtermaterials von 0,5 bis 2 mm und
- einer ausserhalb des Filterbettes, im Abstand (b) von demselben angelegten Gleichstromhochspannung zwischen 10 000 und 60 000 Volt, vorzugsweise 40 000 Volt, einen optimalen Reststaubgehalt des Reingases ergibt, der mit den bisher bekannten Anlagen nicht erzielbar war.

Die erstaunliche Verbesserung bei Verwendung des feineren Kornes lässt sich folgendermassen erklären: Das relativ dicke und grobkörnige Filterbett der bekannten Anlagen ist zu keinem Zeitpunkt des Filterbetriebs ganz sauber, sondern weist – wie bereits erwähnt – kontinuierlich einen von oben nach unten wachsenden Verschmutzungsgrad auf. Der bei der Anwendung der elektrostatischen Hochspannungsaufladung des Filterbettes ausnutzbare Vorteil wird somit bei den bekannten Anlagen dadurch zunichte gemacht, dass das Filterbett in jeder Betriebsphase mindestens teilweise verschmutzt und infolgedessen elektrisch leitend ist. Durch das Filterbett der bekannten Anlagen fliesst somit ständig ein beträchtlicher Strom, was nicht nur den Energieverbrauch der Anlage erheblich erhöht, sondern vor allem den Wirkungsgrad der Rohgasreinigung reduziert.

Bei der erfindungsgemässen Einrichtung werden dank der Anordnung der Elektroden innerhalb der das Filterbett umgebenden Luft und im Abstand vom Filterbett Kriechströme und Kurzschlüsse vermieden. Ferner wird das gesamte Filterbett in jeder Regenerierphase komplett, d.h. über die gesamte Filterbetthöhe, durch gereinigtes, d.h. elektrisch ausgezeichnet isolierendes Filtermaterial ersetzt. Durch den gleichzeitigen Einsatz mehrerer parallelgeschalteter Anlagen und die ständige Regenerierung mindestens einer dieser Anlagen kann die Regenerierfrequenz so gewählt werden, dass das Filterbett praktisch nie von nennenswertem Strom durchflossen wird, der Reinigungsgrad somit stets optimal bleibt.

Dank der Verwendung eines feinkörnigen Materials wird aber das der vorliegenden Erfindung entsprechende Filterbett bei Anströmung durch das Rohgas ausserdem zunächst nur in seiner rohgasseitigen Randschicht verschmutzt; die restliche Schichtdicke bleibt während der Rohgas-Reinigungsperiode praktisch staubfrei und behält somit die gewünschten elektrischen Isolierungseigenschaften, so dass erfindungsgemäss mit hohen Spannungen zwischen 40 000 und 60 000 Volt gearbeitet werden kann. Diesen Vorteil, wonach zunächst nur die rohgasseitige Randschicht mit Staub verschmutzt und dadurch teilweise leitend gemacht wird, können die grobkörnigen Filterbette nicht zeigen, da hier der Staub von Anfang an relativ tief in das Filterbett eindringt und dieses daher während der gesamten Betriebszeit stromführend ist.

Sind z. B. in einer Anlage 8 Filtervorrichtungen vorhanden, wie dies Fig. 4 zeigt, und geht man von einer Betriebszeit von 40 min aus, so steht für die sukzessive Reinigung jeder einzelnen Filtervorrichtung 36 bis 43 eine Regenerierzeit von 5 min zur Verfügung. Da die Schichtstärke bei dieser Ausführungsform gering gehalten werden kann, lässt sich die relativ geringe Masse des körnigen Filtermaterials in dieser Zeit ohne weiteres mindestens einmal umwälzen. Die in Fig. 2 dargestellte Schichtdicke d des Filterbettes beträgt bei einer bevorzugten Ausführungsform etwa 50 mm bei einer Filtermaterialmenge von ca. 300 kg je Einheit.

Im Gegensatz zu den bekannten Grossanlagen mit kontinuierlichem Durchlauf des körnigen Filtermaterials (150 t) werden somit gemäss der vorliegenden Erfindung eine Reihe kleinerer Anlagen mit relativ geringer Filterbettmasse (0,3 t) eingesetzt, wobei bei insgesamt n Anlagen jeweils n–1 Anlagen im Betrieb sind und somit der Gasdurchsatz sowie der Reinigungsgrad praktisch 100%ig konstant bleiben.

## Patentanspruch

Einrichtung zum diskontinuierlichen Reinigen staubbeladener Rohgase unter Verwendung eines Filterbettes aus körnigem Filtermaterial, wobei im Bereich des Filterbettes eine elektrische Spannung zwischen 10 000 und 60 000 Volt angelegt wird, mit einer Anzahl parallelgeschalteter Filtervorrichtungen (36–43), von welchen jede zwei voneinander beabstandete, gasdurchlässige Wände aufweist, zwischen welchen das Filterbett angeordnet ist, sowie mit Steuervorrichtungen zur Führung eines Rohgasstromes (Ro) durch das Filterbett, zur Unterbrechung des Rohgasstromes und zur Regenerierung des Filterbettes, dadurch gekennzeichet, dass das Filterbett eine Schichtdicke (d) zwischen 25 und 100 mm und das körnige Filtermaterial eine mittlere Korngrösse zwischen 0,5 und 2 mm aufweist und ausserhalb des Filterbettes (44), im Abstand vor einer der beiden gasdurchlässigen Wände, (45, 46) über den Gesamtumfang des Filterbettes (44) verteilt, eine elektrisch leitende Vorrichtung (48) angeordnet ist und diese Vorrichtung an Hochspannung liegt, wobei Mittel (15 bis 18) vorgesehen sind um das körnige Filterbettmaterial in jeweils mindestens einer (39) der Filtervorrichtungen zwecks Regenerierung bei ausgeschalteter Hochspannung mittels eines das Filterbett in Gegenrichtung durchströmenden Spülgasstromes umzuwälzen, und dadurch periodisch komplett zu erneuern, während das Filtermaterial der übrigen Filtervorrichtungen (36–38, 40–43) in Ruhe bleibt.

## Claim

Device for the discontinuous purification of dust-laden crude gases, with the use of a filter bed of granular filter material, an electric voltage of between 10,000 and 60,000 volt being applied in the region of the filter bed, with a plurality of filter devices (36–43) which are arranged in parallel and each have two mutually spaced, gas-permeable walls, between which the filter bed is arranged, and with a control system for passing a crude gas stream (RO) through the filter bed, interrupting the crude gas stream and regenerating the filter bed, characterized in that the filter bed has a layer thickness (D) of between 25 and 100 mm and the granular filter material has a mean grain size of between 0.5 and 2 mm and, outside the filter bed (44), an electrically conductive device (48) is arranged, distributed over the entire circumference of the filter bed (44), at a distance from one of the two gas-permeable walls (45, 46), and a high voltage is applied to this device, means (15 to 18) being provided for turning over the granular filter bed material in at least one (39) of the filter devices at a time for regeneration by means of a flushing gas stream flowing through the filter bed in the opposite direction, while the high voltage is switched off, and thereby completely renewing it periodically, whilst the filter material of the remaining filter devices (36–38), (40–43) remains at rest.

## Revendication

Installation pour l'épuration discontinue de gaz brut chargé de poussières par utilisation d'un lit filtrant formé d'une matière filtrante en granules, une tension électrique de 10 000 à 60 000 volts étant appliquée dans la zone du lit filtrant, comportant un certain nombre de dispositifs filtrants (36–43) montés en parallèle, présentant chacun deux parois perméables au gaz disposées à une certaine distance l'une de l'autre entre lesquelles est disposé un lit filtrant formé d'une matière filtrante en granules, ainsi que des dispositifs de commande permettant de faire passer un flux de gaz brut (Ro) à travers le lit filtrant, d'interrompre le flux de gaz et de régénerer le lit filtrant, caractérisé en ce que le lit filtrant a une épaisseur (d) de 25 à 100 mm, et la matière filtrante en granules présente une granulométrie moyenne de 0,5 à 2 mm, un dispositif conducteur d'électricité (48) réparti sur l'ensemble de la périphérie du lit filtrant (44) étant prévu à une certaine distance de l'une des deux parois perméables au gaz (45, 46) et ce dispositif est connecté à la haute tension, des moyens (15, 18) étant prévus pour faire circuler la matière filtrante en granules du lit chaque fois dans au moins un des dispositifs filtrants (39) en vue d'une régénération, pour ainsi complètement renouveler ce lit périodiquement, tandis que la matière filtrante des autres dispositifs filtrants (36–38; 40–43) rest au repos.

Fig. 1

0 035 973

Fig. 2

Fig. 3

Fig. 4

0 035 973

## Fig. 5

## Fig. 6

## Fig. 7

Reingas-Reststaubgehalt in mg / Nm³